# EUROPÄISCHE PATENTSCHRIFT

(11) **EP 2 315 089 B1**
(45) Veröffentlichungstag und Bekanntmachung des Hinweises auf die Patenterteilung: **18.06.2014**
(21) Anmeldenummer: 10176980.0
(22) Anmeldetag: 16.09.2010
(51) Int. Cl.: G05B 19/042, G05B 19/418, H04L 12/40

(54) **Feldbusinterface mit einem Aufnahme- und Wiedergabemodul für Datenverkehr auf dem Feldbus**
Fieldbus-Interface with a recording and playback device for data-communication on the fieldbus
Interface d'un bus de terrain avec un dispositif d' enregistrement et retransmission de trafic de données du bus de terrain

(30) Priorität: 20.10.2009 DE 102009045863
(43) Veröffentlichungstag der Anmeldung: 27.04.2011
(73) Patentinhaber: Endress + Hauser Process Solutions AG, 4153 Reinach (CH)
(72) Erfinder: Kölblin, Robert, 79539 Lörrach (DE); Maneval, Michael, 79650 Schopfheim (DE); Reinkensmeier, Jörg, 79585 Steinen (DE); Pöschmann, Axel, 4057 Basel (CH)
(74) Vertreter: Andres, Angelika Maria

(56) Entgegenhaltungen:
- EP-A2- 1 385 070
- EP-A2- 1 480 096
- EP-A2- 1 925 918

## Beschreibung

Die Erfindung betrifft eine Feldbusschnittstelleneinheit gemäß dem Oberbegriff des Anspruchs 1 sowie ein Feldbussystem gemäß Anspruch 11. Des weiteren betrifft die Erfindung ein Verfahren zum Aufzeichnen sowie zum Wiedergeben einer Dienstsequenz durch eine Feldbusschnittstelleneinheit gemäß Anspruch 14.

In der Prozessautomatisierungstechnik werden vielfach Feldgeräte eingesetzt, die zur Erfassung und/oder Beeinflussung von Prozessvariablen dienen. Beispiele für derartige Feldgeräte sind Füllstandsmessgeräte, Massedurchflussmessgeräte, Druck- und Temperaturmessgeräte etc., die als Sensoren die entsprechenden Prozessvariablen Füllstand, Durchfluss, Druck bzw. Temperatur erfassen.

Zur Beeinflussung von Prozessvariablen dienen Aktoren, z. B. Ventile oder Pumpen, über die der Durchfluss einer Flüssigkeit in einem Rohrleitungsabschnitt bzw. der Füllstand in einem Behälter geändert werden kann.

Als Feldgeräte werden im Prinzip alle Geräte bezeichnet, die prozessnah eingesetzt werden und die prozessrelevante Informationen liefern oder verarbeiten.

Eine Vielzahl solcher Feldgeräte wird von der Firma Endress+Hauser hergestellt und vertrieben.

Die Parametrierung, Konfiguration und Fehleranalyse der Feldgeräte wird häufig mit Hilfe eines Geräteverwaltungstools durchgeführt, das auf einem an den Feldbus angeschlossenen Rechner installiert ist. Bei diesem Geräteverwaltungstool kann es sich beispielsweise um eine Rahmenapplikation gemäß dem Standard FDT (Field Device Tool) handeln, in die eine Vielzahl von Treibern gemäß dem Standard DTM (Device Type Manager) eingebunden werden können. Mit Hilfe dieser DTM-Treiber kann die Rahmenapplikation dann die einzelnen Geräte des Feldbussystems ansprechen, konfigurieren und parametrieren. Ein Beispiel für ein derartiges Geräteverwaltungstool ist das Programm "FieldCare" der Fa. Endress+Hauser.

Zusätzlich zur anfänglichen Konfiguration und Parametrierung ist das Geräteverwaltungstool auch für die regelmäßige Funktionsüberwachung sämtlicher Geräte eines Feldbussystems oder eines Teilsystems zuständig. Wenn man sich klarmacht, dass ein Feldbussystern beispielsweise mehrere hundert Feldgeräte umfassen kann und für jedes Feldgerät geeignete Anfragen generiert werden müssen, dann wird verständlich, warum das Geräteverwaltungstool oft sehr stark ausgelastet ist.

Aufgabe der Erfindung ist es, eine Feldbusschnittstellekeinheit zur Verfügung zu stellen, welche in der Lage ist, gerätetypspezifische Informationen bei der Informationsabfrage und Informationsauswertung zu berücksichtigen.

Gelöst wird diese Aufgabe durch die in den *Ansprüchen 1 und 14* angegebenen Merkmale.

Vorteilhafte Weiterentwicklungen der Erfindung sind in den Unteransprüchen angegeben.

Eine erfindungsgemäße Feldbusschnittstelleneinheit für einen Feldbus umfasst eine erste Schnittstelle zur Verbindung mit einem Rechner, wobei die Feldbusschnittstelleneinheit dazu ausgelegt ist, über die erste Schnittstelle Befehle oder Nachrichten mit dem Rechner auszutauschen, und eine zweite Schnittstelle zur Verbindung mit dem Feldbus, wobei die Feldhusschnittstelleneinheit dazu ausgelegt ist, über die zweite Schnittstelle Befehle oder Nachrichten mit dem Feldbus auszutauschen. Die Feldbusschnittstelleneinheit umfasst außerdem ein Aufzeichnungsmodul, das dazu ausgelegt ist, während eines Aufzeichnungszeitintervalls einen Datenverkehr auf dem Feldbus, der ein bestimmtes Feldgerät oder eine Gruppe von Feldgeräten betrifft, als Dienstsequenz aufzuzeichnen, sowie ein Wiedergabemodul, das dazu ausgelegt ist, entsprechend einem vordefinierten Zeitplan eine aufgezeichnete Dienstsequenz oder eine davon abgeleitete Dienstsequenz wiederzugeben und über die zweite Schnittstelle auf dem Feldbus zu senden.

Durch das Aufzeichnen und Wiedergeben von Befehlssequenzen durch die Feldbusschnittstelleneinheit kann das Geräteverwaltungstool wirksam entlastet werden. Die mit einem Aufzeichnungsmodul und einem Wiedergabemodul ausgestattete Feldbusschnittstelleneinheit kann Sequenzen von Feldbusbefehlen aufzeichnen, als Makro abspeichern und bei Bedarf wiedergeben. Durch diese auf Seiten der Feldbusschnittstelleneinheit implementierte Aufzeichnungs- und Wiedergabefunktionalität wird das Geräteverwaltungstool wirksam entlastet. Für das Geräteverwaltungstool ist es nicht mehr notwendig, die komplexe Kommunikation mit dem Feldgerät unter Zugriff auf mehrere Treiber aufzusetzen. Stattdessen wird die Kommunikation mit dem Feldgerät von der Feldbusschnittstelleneinheit aus abgewickelt. Die für die Kommunikation mit dem Feldgerät benötigten gerätetypspezifischen Informationen beschafft sich die Feldbusschnittstelleneinheit durch Aufzeichnen des Datenverkehrs auf dem Feldbus. Insofern stehen die für die Kommunikation mit dem Feldgerät benötigten gerätetypspezifischen Informationen auf Seiten der Feldbusschnittstelleneinheit zur Verfügung.

Zur Wiedergabe einer vorher aufgezeichneten Dienstsequenz wird vom Geräteverwaltungstool ein Wiedergabestartbefehl für eine bestimmte Dienstsequenz zur Feldbusschnittstelleneinheit übermittelt, welche daraufhin selbsttätig geeignete Feldbusbefehle auf dem Feldbus erzeugt.

Es ist vorgesehen, dass die aufgezeichnete Dienstsequenz entsprechend einem vorgegebenen Zeitplan selbsttätig durch die Feldbusschnittstelleneinheit aufgerufen wird. Eine derartige regelmäßige Ausführung einer aufgezeichneten Dienstsequenz entsprechend einem vorgegebenen Zeitplan ermöglicht beispielsweise eine selbsttätige automatisierte Überwachung des Zustands der Feldgeräte von der Feldbusschnittstelleneinheit aus. Durch wiederholte Ausführung einer vorher aufgezeichneten Befehlssequenz kann die Feldbusschnittstelleneinheit kontinuierlich den Zustand des Feldgeräts überwachen. Mit Hilfe der erfindungsgemäßen Lösung kann die Zustandsüberwachung für die Feldgeräte vollständig vom Geräteverwaltungstool zur Feldbusschnittstelleneinheit verlagert werden, welche die Zustandsüberwachung entsprechend dem vorgegebenen Zeitplan selbsttätig durchführt. Die Erzeugung der für die regelmäßige Abfrage benötigten Befehlssequenzen kann vollständig an die Feldbusschnittstelleneinheit delegiert werden. Dies führt zu einer erheblichen Entlastung für das Geräteverwaltungstool.

Nachfolgend ist die Erfindung anhand mehrerer in der Zeichnung dargestellter Ausführungsbeispiele näher erläutert.

Es zeigen:
Fig. 1 ein Feldbussystem mit einem Master für den zyklischen Datenverkehr und einem Master für den azyklischen Datenverkehr;
Fig. 2 ein Geräteverwaltungstool gemäß dem Standard FDT mit mehreren DTM-Treibern;
Fig. 3 einen Kommunikationsablauf bei der Aufzeichnung einer Sequenz von Feldbusbefehlen und Feldbusnachrichten, die mit einem bestimmten Feldgerät oder einer Gruppe von Feldgeräten ausgetauscht werden;
Fig. 4 einen Kommunikationsablauf bei der Wiedergabe einer vorher aufgezeichneten Sequenz von Feldbusbefehlen und Feldbusnachrichten; und
Fig. 5 ein Feldbussystem, bei dem eine Feldbusschnittstelleneinheit eine Feldbuskommunikation aufzeichnet, die nicht durch eigene Befehle, sondern durch Befehle eines weiteren Geräteverwaltungstools verursacht ist.

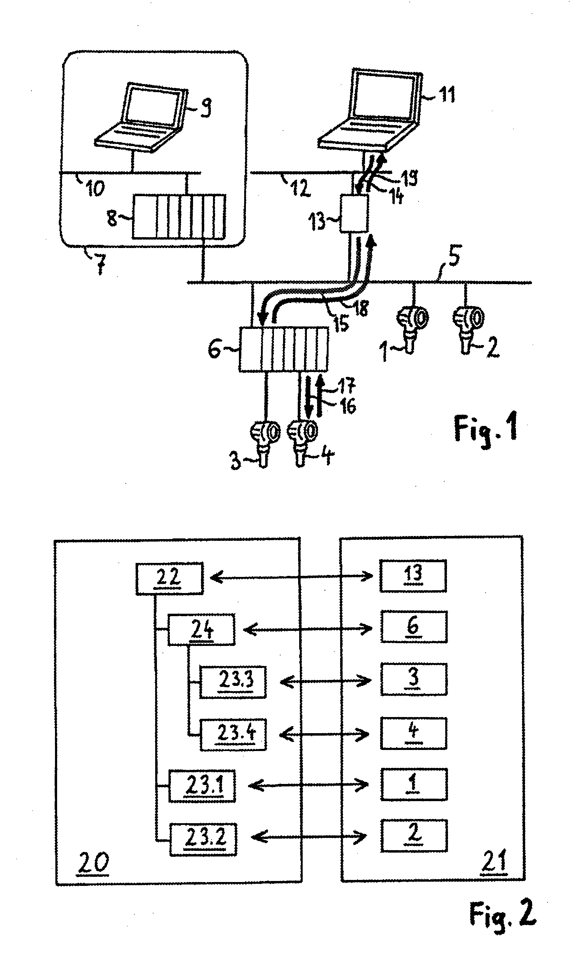

In Fig. 1 ist ein Feldbussystem gezeigt, bei dem eine Mehrzahl von Feldgeräten 1, 2, 3, 4 direkt oder indirekt mit einem Feldbus 5 verbunden sind. Dem Feldbus 5 arbeitet gemäß einem ersten Feldbusprotokoll, beispielsweise gemäß dem Feldbusprotokoll Profibus.

Die beiden Feldgeräte 1, 2 unterstützen das erste Feldbusprotokoll und können daher unmittelbar an den Feldbus 5 angekoppelt werden. Die beiden Feldgeräte 3, 4 dagegen unterstützen lediglich ein zweites Feldbusprotokoll, beispielsweise das Feldbusprotokoll HART. Das Protokoll HART war früher das am meisten verbreitete Feldbusprotokoll und basiert darauf, dass die ermittelten Messwerte in Form von analogen Stromwerten zwischen 4 mA und 20 mA dargestellt und übertragen werden. Da die beiden Feldgeräte 3, 4 lediglich das zweite Feldbusprotokoll (z. B. HART) unterstützen, können sie nicht unmittelbar an den Feldbus 5 angeschlossen werden, sondern müssen über einen Protokollumsetzer 6 mit dem Feldbus 5 verbunden werden. Der Protokollumsetzer 6, der auch als "Remote I/O" oder abgekürzt "RIO" bezeichnet wird, hat dabei die Aufgabe, über den Feldbus 5 empfangene Befehle und Nachrichten gemäß dem ersten Feldbusprotokoll in entsprechende Befehle und Nachrichten des zweiten Feldbusprotokolls umzuwandeln und diese an die Feldgeräte 3, 4 zu übermitteln. Außerdem hat der Protokollumsetzer 6 die Aufgabe, Nachrichten gemäß dem zweiten Feldbusprotokoll, die von den angeschlossenen Feldgeräten 3, 4 empfangen werden, in entsprechende Nachrichten des ersten Feldbusprotokolls umzuwandeln und diese auf dem Feldbus 5 zu übertragen.

Zur Steuerung und Regelung des Feldbussystems ist eine Steuer- und Regeleinheit 7 vorgesehen, die eine an den Feldbus 5 angeschlossene speicherprogrammierbare Steuerung (SPS) 8 umfasst. Die speicherprogrammierbare Steuerung 8 ist für die Abwicklung des zyklischen Datenverkehrs mit den Feldgeräten zuständig. Sie erhält in periodischem Abstand die aktuell von den angeschlossenen Feldgeräten 1-4 ermittelten Messwerte und berechnet daraus mittels eines Regelalgorithmus geeignete Stellwerte für zumindest einige der angeschlossenen Feldgeräte. Zur Programmierung und Überwachung der speicherprogrammierbaren Steuerung 8 kann ein Rechner 9 vorgesehen sein, der über ein lokales Netzwerk 10 an die speicherprogrammierbare Steuerung 8 angeschlossen ist.

Zusätzlich zu der zyklisch arbeitenden Steuer- und Regelungseinheit 7, die als Master des Feldbussystems fungiert, ist als weiterer Master ein Rechner 11 vorgesehen, der über ein lokales Netzwerk 12 und eine Feldbusschnittstelleneinheit 13 mit dem Feldbus 5 verbunden ist. Im Unterschied zur speicherprogrammierbaren Steuerung 8, die für die zyklische Abfrage von Messwerten und die Bestimmung von Stellwerten zuständig ist, ist der Rechner 11 für die Parametrierung, Konfiguration und Funktionsüberwachung der angeschlossenen Feldgeräte 1-4 sowie zur Diagnose von Fehlern vorgesehen. Zur Erfüllung dieser Aufgaben kann der Rechner 11 über das lokale Netzwerk 12, die Feldbusschnittstelleneinheit 13 und den Feldbus 5 auf eines der Feldgeräte 1-4 zugreifen, Parameter aus dem jeweiligen Feldgerät auslesen und/oder Parameter in das Feldgerät einschreiben. Die Lese- und/oder Schreibzugriffe zur Parametrierung, Konfiguration und Funktionsüberwachung der Feldgeräte 1-4 werden dabei vorzugsweise mit Hilfe des azyklischen Datenverkehrs des Feldbusses 5 abgewickelt, welcher unabhängig vom zyklischen Datenverkehr abläuft.

Zur Parametrierung, Konfiguration und Überwachung der Feldgeräte 1-4 ist auf dem Rechner 11 ein Geräteverwaltungstool installiert, mit dem die Geräteparameter der Feldgeräte programmiert und überwacht werden können. Bei dem Geräteverwaltungstool kann es sich beispielsweise um eine Rahmenapplikation gemäß dem Standard FDT (Field Device Tool) handeln, wobei in diese Rahmenapplikation geeignete Treiber für die Feldgeräte 1-4, für den Protokollumsetzer 6 und die Feldbusschnittstelleneinheit 13 eingebunden werden können. Diese Treiber für die einzelnen Geräte des Feldbussystems entsprechen vorzugsweise dem Standard DTM (Device Type Manager). Mit Hilfe der DTM-Treiber kann über das auf dem Rechner 11 installierte Geräteverwaltungstool auf jedes der an den Feldbus 5 angeschlossenen Feldgeräte in geeigneter Form zugegriffen werden.

Für einen Zugriff auf das Feldgerät 3 sendet das Geräteverwaltungstool beispielsweise eine entsprechende Ethernet-Nachricht 14 über das lokale Netzwerk 12 zur Feldbusschnittstelleneinheit 13. Dort wird die Ethernet-Nachricht 14 in eine entsprechende Nachricht 15 des ersten Feldbusprotokolls umgewandelt und auf dem Feldbus 5 übertragen. Beispielsweise kann es sich bei der Nachricht 15 um ein Telegramm gemäß dem Standard Profibus handeln. Der Protokollumsetzer 6 empfängt die Nachricht 15 und wandelt sie in eine entsprechende Nachricht 16 gemäß dem zweiten Feldbusprotokoll um, welche zum Feldgerät 4 übermittelt wird. Bei der Nachricht 16 kann es sich beispielsweise um einen Befehl gemäß dem Protokoll HART handeln. In umgekehrter Richtung übermittelt das Feldgerät 4 eine Antwort 17 gemäß dem zweiten Feldbusprotokoll an den Protokollumsetzer 6. Dort wird sie in eine entsprechende Nachricht 18 gemäß dem ersten Feldbusprotokoll umgesetzt und auf dem Feldbus 5 übertragen. Die Feldbusschnittstelleneinheit 13 empfängt die Nachricht 18 und erzeugt eine entsprechende Ethernet-Nachricht 19, die zum Rechner 11 übermittelt wird.

Zum Aufsetzen dieser relativ komplexen Kommunikation mit dem Feldgerät 4 benötigt das Geräteverwaltungstool zusätzlich zu den Informationen über das Feldgerät 4 auch Informationen über die Feldbusschnittstelleneinheit 13, über die Busparameter des Feldbusses 5 sowie über die Eigenschaften des Protokollumsetzers 6. Die benötigten Informationen werden dem Geräteverwaltungstool in Form von DTM-Treibern zur Verfügung gestellt. Der Feldbusschnittstelleneinheit 13 ist ein sogenannter Kommunikations-DTM (auch als Comm-DTM bezeichnet) zugeordnet, welcher die Busparameter des Feldbusses wie beispielsweise Baudrate, minimale Antwortverzögerung (Minimum Station Response Delay, MinSRD), maximale Antwortverzögerung (Maximum Station Response Delay, MaxSRD) etc. spezifiziert. Auch dem Protokollumsetzer 6 ist ein eigener DTM-Treiber zugeordnet, welcher als "Gateway-DTM" bezeichnet wird. Dieser Gateway-DTM spezifiziert, auf welche Weise und unter welchen Adressen die verschiedenen an den Protokollumsetzer 6 angeschlossenen Feldgeräte 3, 4 angesprochen werden können. Zu dem Feldgerät 4 gibt es ebenfalls einen DTM-Treiber, welcher die Parameter und Funktionalitäten des Feldgeräts 4 beschreibt.

In Fig. 2 ist die Zuordnung zwischen den DTM-Treibern im Geräteverwaltungstool 20 und den Komponenten des Feldbussystems auf Feldebene 21 veranschaulicht. Bei dem Geräteverwaltungstool 20 kann es sich beispielsweise um eine Rahmenapplikation gemäß dem Standard FDT handeln, beispielsweise um das Programm "FieldCare" der Fa. Endress+Hauser. Ein derartiges Geräteverwaltungstool 20 ermöglicht die Installation und den Betrieb einer Vielzahl von DTM-Treibern für die einzelnen Komponenten des Feldbussystems.

Wie in Fig. 2 gezeigt, umfasst das Geräteverwaltungstool 20 einen Comm-DTM 22, der der Feldbusschnittstelleneinheit 13 zugeordnet ist und Parameter der Kommunikation auf dem Feldbus spezifiziert. Das Geräteverwaltungstool 20 umfasst außerdem die beiden Geräte-DTMs 23.1 und 23.2, die den Feldgeräten 1 und 2 zugeordnet sind und deren Funktionalität beschreiben. Darüber hinaus umfasst das Geräteverwaltungstool 20 einen Gateway-DTM 24, welcher die Funktion des Protokollumsetzers 6 beschreibt, sowie die beiden Feldgeräte-DTMs 23.3 und 23.4, die den Feldgeräten 3 und 4 zugeordnet sind und deren Funktionalität beschreiben. Insofern ist jeder der Komponenten auf Feldebene 21 ein entsprechender DTM-Treiber im Geräteverwaltungstool 20 zugeordnet, der die Funktion der jeweiligen Komponente beschreibt.

Zum Aufsetzen der in Fig. 1 gezeigten Kommunikation zwischen dem Geräteverwaltungstool und dem Feldgerät 4 muss das Geräteverwaltungstool 20 auf den Comm-DTM 22, den Gateway-DTM 24 und auf den Geräte-DTM 23.4 zugreifen, der das Feldgerät 4 beschreibt. Der auf Seiten des Geräteverwaltungstools 20 erforderliche rechnerische Aufwand zum Erzeugen der Kommunikation mit dem Feldgerät 4 ist daher relativ hoch. Wenn man sich darüber hinaus vergegenwärtigt, dass an ein Feldbus-Teilsystem eine Vielzahl von Protokollumsetzern (auch als Remote I/Os bezeichnet) angeschlossen sein können und an jeden der Protokollumsetzer 20-50 Feldgeräte angeschlossen sein können, dann wird klar, dass die auf Seiten des Geräteverwaltungstools benötigten Ressourcen für das Aufsetzen des Datenaustauschs mit den verschiedenen Feldgeräten relativ hoch sein können. Dabei wird sowohl durch Einzelabfragen an die Feldgeräte als auch durch die regelmäßig wiederholte Zustandsüberwachung der Feldgeräte ein erheblicher Aufwand auf Seiten des Geräteverwaltungstools verursacht.

Eine Idee der Erfindung ist es daher, Aufgaben vom Rechner 11 und dem dort installierten Geräteverwaltungstool zur Feldbusschnittstelleneinheit 13 zu übertragen, um das Geräteverwaltungstool zu entlasten. Insbesondere wird vorgeschlagen, die Feldbusschnittstelleneinheit 13 mit einem Aufnahmemodul und einem Wiedergabemodul auszustatten, wobei das Aufnahmemodul dazu ausgelegt ist, Sequenzen von Befehlen und Nachrichten auf dem Feldbus aufzuzeichnen, die ein bestimmtes Feldgerät oder eine Gruppe von Feldgeräten betreffen. Das Wiedergabemodul ist dazu ausgelegt, auf eine entsprechende Anforderung des Rechners 11 hin oder entsprechend einem vorgegebenen Zeitplan aufgezeichnete Sequenzen von Befehlen und Nachrichten wiederzugeben und auf dem Feldbus 5 zu übertragen. Auf diese Weise wird die Feldbusschnittstelleneinheit 13 in die Lage versetzt, selbstständig geeignete Dienstsequenzen für ein Feldgerät oder eine Gruppe von Feldgeräten zu generieren, und dadurch kann das auf dem Rechner 11 laufende Geräteverwaltungstool entlastet werden.

Insbesondere wird das Geräteverwaltungstool davon entlastet, jeweils mehrere DTMs (Comm-DTM, Gateway-DTM, Geräte-DTM) aufrufen zu müssen, um einen Befehl oder eine Nachricht für ein bestimmtes Feldgerät zu generieren.

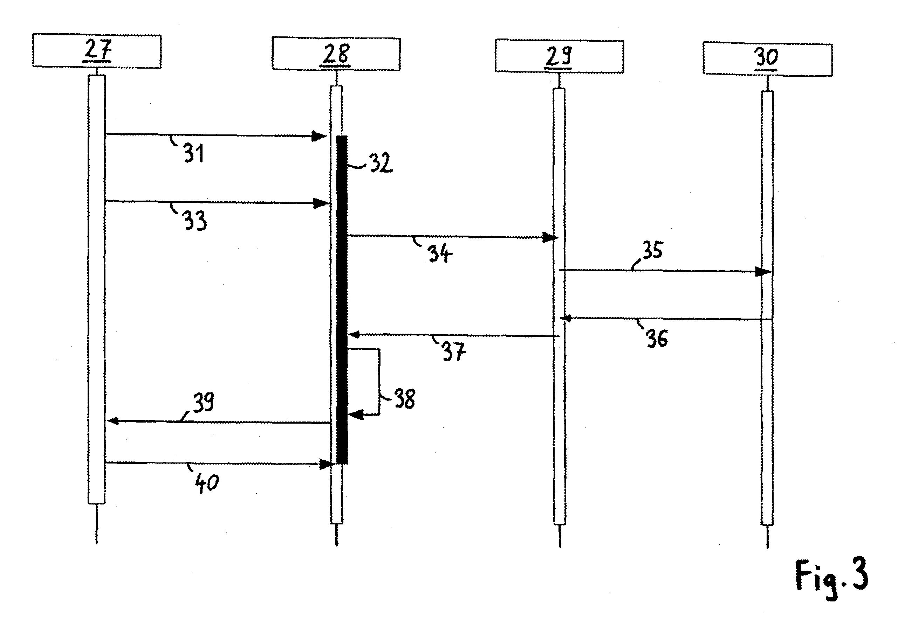

In Fig. 3 ist dargestellt, wie eine Sequenz von auf dem Feldbus übertragenen Nachrichten von der Feldbusschnittstelleneinheit aufgezeichnet wird. Hierzu ist die Kommunikation zwischen dem Geräteverwaltungstool 27, der Feldbusschnittstelleneinheit 28, dem Protokollumsetzer 29 und dem Feldgerät 30 in ihrem zeitlichen Ablauf dargestellt. Zunächst übermittelt das Geräteverwaltungstool 27 einen Aufzeichnungsstartbefehl 31 an die Feldbusschnittstelleneinheit 28. In dem Aufzeichnungsstartbefehl 31 wird ein bestimmtes Feldgerät oder eine Gruppe von Feldgeräten angegeben, wobei nur der dieses Feldgerät oder diese Gruppe von Feldgeräten betreffende Teil der Feldbuskommunikation aufgezeichnet werden soll. Bei dem in Fig. 3 gezeigten Beispiel wird die Kommunikation mit dem Feldgerät 30 aufgezeichnet.

Auf den Empfang des Aufzeichnungsstartbefehls 31 hin beginnt das Aufzeichnungsmodul der Feldbusschnittstelleneinheit 28 mit der Aufzeichnung der Feldbuskommunikation, die das Feldgerät 30 betrifft. Das Aufzeichnungszeitintervall 32 ist in Fig. 3 durch einen in vertikaler Richtung verlaufenden schwarzen Balken veranschaulicht. Während des Aufzeichnungszeitintervalls 32 wird die Feldbuskommunikation, die das Feldgerät 30 betrifft, aufgezeichnet. Auf diese Weise wird eine Sequenz von Befehlen erfasst, die als Makro abgespeichert und später wieder aufgerufen werden kann.

Nachdem die Aufzeichnung der Feldbuskommunikation gestartet ist, übermittelt das Geräteverwaltungstool 27 einen Befehl 33, beispielsweise einen Lesebefehl, über Ethernet an die Feldbusschnittstelleneinheit 28. Die Feldbusschnittstelleneinheit 28 setzt den Befehl 33 in einen oder mehrere entsprechende Feldbusbefehle 34 gemäß dem ersten Feldbusprotokoll um (beispielsweise in Profibus-Telegramme) und übermittelt diese über den Feldbus. Diese Feldbusbefehle 34 werden von der Feldbusschnittstelleneinheit 28 aufgezeichnet.

Der Protokollumsetzer 29 empfängt den bzw. die Feldbusbefehle 34 gemäß dem ersten Feldbusprotokoll und wandelt sie in einen oder mehrere entsprechende Feldbusbefehle 35 gemäß dem zweiten Feldbusprotokoll um (beispielsweise in HART-Befehle). Der bzw. die Feldbusbefehle 35 gemäß dem zweiten Feldbusprotokoll werden zum Feldgerät 30 übermittelt. Auf Seiten des Feldgeräts 30 werden die gewünschten Parameter ausgelesen und in einer Antwortnachricht 36 gemäß dem zweiten Feldbusprotokoll zum Protokollumsetzer 29 übermittelt. Der Protokollumsetzer 29 setzt die Antwortnachricht 36 gemäß dem zweiten Feldbusprotokoll in eine entsprechende Antwortnachricht 37 gemäß dem ersten Feldbusprotokoll um (beispielsweise in ein Profibus-Telegramm).

Die Antwortnachricht 37 mit den gelesenen Parametern wird über den Feldbus übertragen und von der Feldbusschnittstelleneinheit 28 empfangen. Aus der Antwortnachricht 37 erfährt die Feldbusschnittstelleneinheit 28 die Adresse des zweiten Feldbusprotokolls, unter der das Feldgerät 30 vom Protokollumsetzer 29 angesprochen wird (beispielsweise die HART-Adresse). In Schritt 38 wird auf Seiten der Feldbusschnittstelleneinheit 28 die Zuordnung zwischen dem Feldgerät 30 und der zugehörigen Adresse des zweiten Feldbusprotokolls abgespeichert.

Daraufhin übermittelt die Feldbusschnittstelleneinheit 28 eine Antwortnachricht 39 mit dem bzw. den aus dem Feldgerät 30 ausgelesenen Parameterwerten über Ethernet an das Geräteverwaltungstool 27. Bei dem in Fig. 3 dargestellten Beispiel soll nur die durch den Befehl 33 verursachte Feldbuskommunikation mit dem Feldgerät 30 aufgezeichnet werden. Deshalb wird die Aufzeichnung der Feldbuskommunikation nach dem Empfang der Antwortnachricht 39 beendet. Das Geräteverwaltungstool 27 übermittelt einen Aufzeichnungsendebefehl 40 an die Feldbusschnittstelleneinheit 28, welche daraufhin die Aufzeichnung der Feldbuskommunikation mit dem Feldgerät 30 beendet. Das Aufzeichnungszeitintervall 32 erstreckt sich daher vom Aufzeichnungsstartbefehl 31 bis zum Aufzeichnungsendebefehl 40. Die während des Aufzeichnungszeitraums aufgezeichnete Sequenz von Feldbusbefehlen und Feldbusnachrichten wird als Makro abgespeichert.

Während bei dem in Fig. 3 beschriebenen Beispiel nur die vom Befehl 33 ausgelöste Feldbuskommunikation aufgezeichnet wird, wäre es alternativ dazu auch denkbar, eine Abfolge von mehreren Befehle nacheinander vom Geräteverwaltungstool 27 zur Feldbusschnittstelleneinheit 28 zu übermitteln und die gesamte zugehörige Feldbuskommunikation aufzuzeichnen und als Makro zu speichern.

Bei der in Fig. 3 gezeigten Ausführungsform wird das Aufzeichnungsintervall 32 durch den Aufzeichnungsstartbefehl 31 und den Aufzeichnungsendebefehl 40 festgelegt.

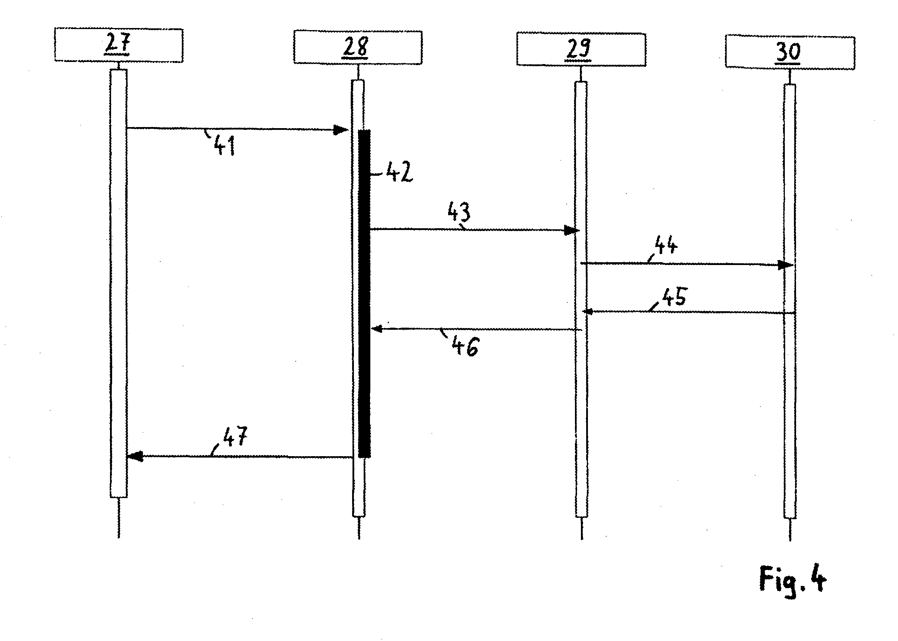

In Fig. 4 ist dargestellt, wie die in Fig. 3 aufgezeichnete Sequenz von Feldbusbefehlen und Feldbusnachrichten zu einem späteren Zeitpunkt durch das Wiedergabemodul der Feldbusschnittstelleneinheit reproduziert werden kann. Dazu ist in Fig. 4 der zeitliche Ablauf der Kommunikation bei der Wiedergabe des Makros gezeigt. Das Geräteverwaltungstool 27, die Feldbusschnittstelleneinheit 28, der Protokollumsetzer 29 und das Feldgerät 30 sind dabei mit denselben Bezugszeichen wie in Fig. 3 bezeichnet.

Um die Wiedergabe der vorher aufgezeichneten Sequenz von Feldbusbefehlen und Feldbusnachrichten zu starten, sendet das Geräteverwaltungstool 27 einen Wiedergabestartbefehl 41 über Ethernet an die Feldbusschnittstelleneinheit 28. Auf den Empfang des Wiedergabestartbefehls 41 hin beginnt das Wiedergabemodul der Feldbusschnittstelleneinheit 28 mit der Wiedergabe der vorher aufgezeichneten und abgespeicherten Feldbuskommunikation mit dem Feldgerät 30. Das Wiedergabezeitintervall 42 ist in Fig. 4 durch einen schwarzen Balken veranschaulicht. Während des Wiedergabezeitintervalls 42 wird die vorher aufgezeichnete Sequenz von Befehlen und Nachrichten reproduziert. Der vorher aufgezeichnete Feldbusbefehl 43 gemäß dem ersten Feldbusprotokoll (im vorliegenden Beispiel Profibus) wird auf dem Feldbus übertragen, vom Protokollumsetzer 29 empfangen und in einen entsprechenden Feldbusbefehl 44 gemäß dem zweiten Feldbusprotokoll (im vorliegenden Beispiel HART) umgesetzt. Das Feldgerät 30 empfängt den Feldbusbefehl 44 und führt die entsprechende Operation aus (im vorliegenden Beispiel das Auslesen von einem oder mehreren Parametern). Anschließend übermittelt das Feldgerät 44 eine Antwortnachricht 45 gemäß dem zweiten Feldbusprotokoll, welche die ausgelesenen Parameter enthält, an den Protokollumsetzer 29, und dieser setzt die Antwortnachricht 45 in eine entsprechende Antwortnachricht 46 gemäß dem ersten Feldbusprotokoll um. Diese Antwortnachricht 46 wird von der Feldbusschnittstelleneinheit 28 empfangen. Am Ende des Wiedergabezeitintervalls 42 sendet die Feldbusschnittstelleneinheit 28 eine Antwort 47 mit den ausgelesenen Parametern über Ethernet an das Geräteverwaltungstool 27. Diese Antwort 47 kann zusätzlich einen Bericht über die Ausführung der aufgezeichneten Sequenz enthalten.

Durch das Aufzeichnen und Wiedergeben von Befehlssequenzen durch die Feldbusschnittstelleneinheit kann das Geräteverwaltungstool wirksam entlastet werden. Die mit einem Aufzeichnungsmodul und einem Wiedergabemodul ausgestattete Feldbusschnittstelleneinheit kann Sequenzen von Feldbusbefehlen aufzeichnen, als Makro abspeichern und bei Bedarf wiedergeben. Durch diese auf Seiten der Feldbusschnittstelleneinheit implementierte Aufzeichnungs- und Wiedergabefunktionalität wird das Geräteverwaltungstool wirksam entlastet. Für das Geräteverwaltungstool ist es nicht mehr notwendig, die komplexe Kommunikation mit dem Feldgerät unter Zugriff auf mehrere DTM-Treiber aufzusetzen. Stattdessen genügt es, einen Wiedergabestartbefehl für ein bestimmtes Makro an die Feldbusschnittstelleneinheit zu übermitteln, welche daraufhin das zugehörige Makro aufruft und selbsttätig geeignete Feldbusbefehle auf dem Feldbus erzeugt.

Im Folgenden sollen einige Beispiele von Befehlssequenzen beschrieben werden, die auf Seiten der Feldbusschnittstelleneinheit zur Verfügung gestellt werden können. Beispielsweise kann ein Makro "Identifikationsbeschaffung" vorgesehen sein, welches verschiedene Informationen zu einem bestimmten Feldgerät wie beispielsweise Gerätetyp, Hardwareversion, Softwareversion, Betriebsmodus etc. des betreffenden Feldgerät liefert, indem die entsprechenden Parameter des Feldgeräts abgefragt werden.

Zum Abfragen der Stellkraft von Ventilen kann außerdem ein Makro "Stellkrafterfassung" vorgesehen sein, welches Parameter, die die Stellkraft eines Ventils charakterisieren, aus dem Ventil auslesen. Mit Hilfe des Makros "Stellkrafterfassung" wird eine Überwachung der Stellkraft eines Ventils ermöglicht.

Bei dem in Fig. 4 gezeigten Beispiel wird die Wiedergabe der aufgezeichneten Befehlssequenz mittels eines expliziten Wiedergabestartbefehls 41 ausgelöst, der vom Geräteverwaltungstool 27 zur Feldbusschnittstelleneinheit 28 übertragen wird. Bei dieser Ausführungsform wird die Ausführung der Dienstsequenz durch die Feldbusschnittstelleneinheit also explizit durch das Geräteverwaltungstool 27 angestoßen.

Alternativ dazu kann vorgesehen sein, dass die aufgezeichnete Dienstsequenz durch die Feldbusschnittstelleneinheit 28 entsprechend einem vorgegebenen Zeitplan selbsttätig aufgerufen wird. Da die Wiedergabe der Befehlssequenz durch den auf Seiten der Feldbusschnittstelleneinheit gespeicherten Zeitplan ausgelöst wird, ist es nicht notwendig, für jede Ausführung der aufgezeichneten Dienstsequenz einen separaten Wiedergabestartbefehl vom Geräteverwaltungstool 27 zur Feldbusschnittstelleneinheit 28 zu übermitteln. Allenfalls könnten Befehle zum Aufsetzen des Zeitplans vorgesehen sein, die vom Geräteverwaltungstool 27 zur Feldbusschnittstelleneinheit 28 übermittelt werden.

Durch wiederholte Ausführung einer vorher aufgezeichneten Befehlssequenz kann die Feldbusschnittstelleneinheit beispielsweise einen oder mehrere Parameter eines Feldgeräts in regelmäßigen Abständen abrufen und auf diese Weise kontinuierlich den Zustand des Feldgeräts überwachen. Eine derartige Überwachung eines Feldgeräts wird als "Condition Monitoring" bezeichnet. Mit Hilfe der erfindungsgemäßen Lösung kann die Zustandsüberwachung für die Feldgeräte vollständig vom Geräteverwaltungstool zur Feldbusschnittstelleneinheit verlagert werden, welche die Zustandsüberwachung entsprechend dem vorgegebenen Zeitplan selbsttätig durchführt. Dies führt zu einer erheblichen Entlastung für das Geräteverwaltungstool, denn es ist nicht mehr notwendig, jede im Rahmen des "Condition Monitoring" erzeugte Abfrage unter Zugriff auf mehrere DTM-Treiber einzeln aufzusetzen. Stattdessen wird die Erzeugung der für die regelmäßige Abfrage benötigten Befehlssequenzen vollständig an die Feldbusschnittstelleneinheit delegiert. Lediglich die Ergebnisse der Zustandsüberwachung werden von der Feldbusschnittstelleneinheit an das Geräteverwaltungstool zurückgemeldet.

Zur Durchführung der Zustandsüberwachung kann die Feldbusschnittstelleneinheit eine Auftragsliste umfassen, welche dafür sorgt, dass die verschiedenen für die Zustandsüberwachung benötigten Makros entsprechend einem vorgegebenen Zeitplan regelmäßig aufgerufen werden.

**Tabelle 1**

| **Name des Makros** | **Startzeit** | **Wiederholungszeitintervall** |
|---|---|---|
| Identifikationsbeschaffung | 14:50 Uhr | - |
| Stellkrafterfassung | 15:01 Uhr | alle 20 min |

In Tabelle 1 ist ein Beispiel einer derartigen Auftragsliste gezeigt. Zu jedem der auszuführenden Makros ist die nächste Startzeit des Makros sowie ggf. das Wiederholungszeitintervall für die regelmäßige Ausführung des Makros angegeben. Bei dem in Tabelle 1 gezeigten Beispiel einer Auftragsliste wird das Makro "Identifikationsbeschaffung" nur einmal um 14:50 Uhr ausgeführt. Dagegen wird das Makro "Stellkrafterfassung" das nächste Mal um 15:01 Uhr und dann alle 20 Minuten ausgeführt.

Bei der anhand von Fig. 3 beschriebenen Ausführungsform wurde die Aufzeichnung der Feldbuskommunikation vom Geräteverwaltungstool 27 aus gestartet und beendet. Darüber hinaus wurde auch der Befehl 33, der die Kommunikation auf dem Feldbus auslöste, von dem Geräteverwaltungstool 27 erzeugt und an die Feldbusschnittstelleneinheit 28 übermittelt. Allerdings ist es nicht zwingend erforderlich, dass der Aufzeichnungsstartbefehl 31 und der Befehl 33, der dann die Kommunikation auf dem Feldbus auslöst, von ein und demselben Geräteverwaltungstool stammen. Mit Hilfe der erfindungsgemäßen Feldbusschnittstelleneinheit kann auch eine Feldbuskommunikation aufgezeichnet werden, die von einem anderen Geräteverwaltungstool eines anderen Herstellers initiiert wird.

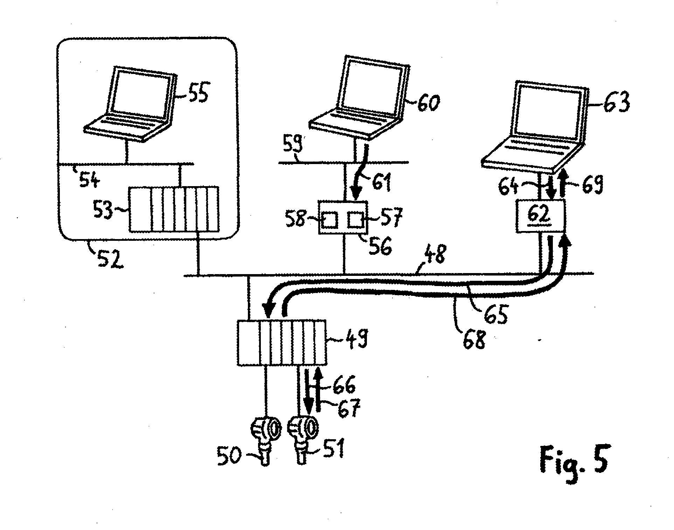

Eine derartige Ausführungsform soll im Folgenden anhand des in Fig. 5 gezeigten Feldbussystems erläutert werden. Das Feldbussystem umfasst einen Feldbus 48, der entsprechend einem ersten Feldbusprotokoll (z.B. Profibus) arbeitet. An den Feldbus 48 ist ein Protokollumsetzer 49 angeschlossen, der das erste Feldbusprotokoll (beispielsweise Profibus) in ein zweites Feldbusprotokoll (beispielsweise HART) umsetzt und umgekehrt. An den Protokollumsetzer 49 sind zwei Feldgeräte 50, 51 angeschlossen, die gemäß dem zweiten Feldbusprotokoll (im vorliegenden Beispiel HART) betrieben werden. Für den zyklischen Datenaustausch mit den Feldgeräten 50, 51 ist eine Steuerungs- und Regelungseinheit 52 mit einer speicherprogrammierbaren Steuerung 53 vorgesehen, welche über ein lokales Netzwerk 54 mit einem Rechner 55 gekoppelt ist. An den Feldbus 48 ist eine erfindungsgemäße Feldbusschnittstelleneinheit 56 angeschlossen, welche ein Aufzeichnungsmodul 57 sowie ein Wiedergabemodul 58 umfasst. Mittels des Aufzeichnungsmoduls 57 kann eine Sequenz von Befehlen und Nachrichten auf dem Feldbus 48 aufgezeichnet werden, und das Wiedergabemodul 58 kann aufgezeichnete Sequenzen von Feldbusnachrichten wiedergeben und auf dem Feldbus 48 senden. Die Feldbusschnittstelleneinheit 56 ist über ein lokales Netzwerk 59 mit einem Rechner 60 verbunden, auf dem ein Geräteverwaltungstool zur Konfiguration, Parametrierung und Überwachung der Feldgeräte installiert ist. Vorzugsweise handelt es sich bei dem Geräteverwaltungstool um eine Rahmenapplikation entsprechend dem Standard FDT (Field Device Tool), in die eine Mehrzahl von DTM-Treibern für die verschiedenen Geräte des Feldbussystems eingebunden sind. Von dem Geräteverwaltungstool aus kann mittels geeigneter Befehle 61 die Aufzeichnung der Feldbuskommunikation durch das Aufzeichnungsmodul 57 gestartet und beendet werden.

Das in Fig. 5 gezeigte Feldbussystem umfasst außerdem eine weitere Feldbusschnittstelleneinheit 62, die mit einem Rechner 63 verbunden ist. Auf dem Rechner 63 ist ein weiteres Geräteverwaltungstool installiert, mit dem ebenfalls eine Parametrierung, Konfiguration und Fehleranalyse von Feldgeräten, die an den Feldbus 48 angeschlossen sind, durchgeführt werden kann. Dabei kann das weitere Geräteverwaltungstool auch entsprechend einem anderen Standard als dem FDT-Standard realisiert sein. Zum Ansprechen eines Feldgeräts (beispielsweise des Feldgeräts 51) übermittelt das weitere Geräteverwaltungstool einen entsprechenden Befehl 64 an die Feldbusschnittstelleneinheit 62, welche den Befehl 64 in entsprechende Feldbusbefehle 65 gemäß dem ersten Feldbusprotokoll umsetzt. Der Protokollumsetzer 49 wandelt diese Feldbusbefehle 65 in entsprechende Busbefehle 66 gemäß dem zweiten Feldbusprotokoll um und leitet diese zum angesprochenen Feldgerät 51 weiter. Umgekehrt wird eine Nachricht 67 des Feldgeräts 51 durch den Protokollumsetzer 49 vom zweiten Feldbusprotokoll ins erste Feldbusprotokoll umgewandelt und anschließend als Feldbusnachricht 68 auf dem Feldbus 48 übertragen. Die Feldbusschnittstelleneinheit 62 empfängt die Feldbusnachricht 48 und übermittelt sie als Nachricht 69 zu dem auf dem Rechner 63 installierten weiteren Geräteverwaltungstool.

Dieser durch den Befehl 64 hervorgerufene Datenverkehr auf dem Feldbus 48 kann ebenfalls durch das Aufzeichnungsmodul 57 der Feldbusschnittstelleneinheit 56 aufgezeichnet werden. Hierzu wird zunächst durch einen entsprechenden Befehl 61 die Aufzeichnung durch das Aufzeichnungsmodul 57 gestartet. Anschließend wird von dem weiteren Geräteverwaltungstool aus ein Befehl 64 zur Feldbusschnittstelleneinheit 62 übermittelt, der eine Sequenz von Feldbusbefehlen und -nachrichten auf dem Feldbus 48 auslöst. Diese Sequenz von Feldbusbefehlen und -nachrichten wird durch das Aufzeichnungsmodul 57 aufgezeichnet. Bei dieser Aufzeichnung handelt es sich um eine Aufzeichnung einer Feldbuskommunikation, die gemäß dem ersten Feldbusprotokoll abläuft. Da es sich insofern um eine Aufzeichnung von Befehlen und Nachrichten gemäß dem ersten Feldbusprotokoll handelt, erfolgt diese Aufzeichnung völlig unabhängig von dem Standard, gemäß dem das weitere Geräteverwaltungstool auf dem Rechner 63 arbeitet. Die aufgezeichnete Sequenz von Befehlen und Nachrichten wird gespeichert und kann bei Bedarf durch das Wiedergabemodul 58 der Feldbusschnittstelleneinheit 56 wiedergegeben werden. Darüber hinaus können aus den aufgezeichneten Befehlen und Nachrichten Informationen über das Feldbussystem erhalten werden. Beispielsweise kann anhand der aufgezeichneten Sequenz von Befehlen und Nachrichten ermittelt werden, über welche Adressen des zweiten Feldbusprotokolls auf die an den Protokollumsetzer 49 angeschlossenen Feldgeräte 50, 51 zugegriffen werden kann.

Alternativ dazu könnte auch durch die speicherprogrammierbare Steuerung 53 ein azyklischer Datenverkehr auf dem Feldbus 48 initiiert werden. Voraussetzung dafür ist, dass die speicherprogrammierbare Steuerung 53 zusätzlich zur Funktionalität als Master für den zyklischen Datenverkehr auch als Master für den azyklischen Datenverkehr eingerichtet ist. Im Standard Profibus DP sind derartige Kombinationen möglich, man spricht dort auch von einem Master Klasse 1 für den zyklischen Datenverkehr und von einem Master Klasse 2 für den azyklischen Datenverkehr. Der Protokollstack von modernen speicherprogrammierbaren Steuerungen umfasst heute in der Regel sowohl die Funktionalität eines Masters Klasse 1 als auch die eines Masters Klasse 2.

Ein von der speicherprogrammierbaren Steuerung 53 in ihrer Funktion als Master Klasse 2 verursachter Datenverkehr auf dem Feldbus 48 kann ebenfalls durch das Aufzeichnungsmodul 57 aufgezeichnet werden. Hierzu wird zunächst durch einen entsprechenden Befehl 61 die Aufzeichnung durch das Aufzeichnungsmodul 57 gestartet. Anschließend wird vom Master Klasse 2 der speicherprogrammierbaren Steuerung 53 mittels eines entsprechenden Befehls ein Datenverkehr auf dem Feldbus 48 ausgelöst. Diese Sequenz von Feldbusbefehlen und -nachrichten wird durch das Aufzeichnungsmodul 57 aufgezeichnet. Die aufgezeichnete Sequenz wird gespeichert und kann bei Bedarf durch das Wiedergabemodul 58 der Feldbusschnittstelleneinheit 56 wiedergegeben werden.

## Patentansprüche

1. Feldbusschnittstelleneinheit (13, 56) für einen Feldbus (5, 48), mit
einer ersten Schnittstelle zur Verbindung mit einem Rechner (11, 63), wobei die Feldbusschnittstelleneinheit (13, 56) dazu ausgelegt ist, über die erste Schnittstelle Befehle oder Nachrichten mit dem Rechner (11, 63) auszutauschen;
einer zweiten Schnittstelle zur Verbindung mit dem Feldbus (5, 48), wobei die Feldbusschnittstelleneinheit (13, 56) dazu ausgelegt ist, über die zweite Schnittstelle Befehle oder Nachrichten mit dem Feldbus (5, 48) auszutauschen;
wobei die Feldbusschnittstelleneinheit ferner dazu ausgelegt ist, von dem Rechner empfangene Befehle oder Nachrichten zumindest teilweise in entsprechende Befehle oder Nachrichten für eine Übertragung auf dem Feldbus umzusetzen und auf dem Feldbus übertragene Befehle oder Nachrichten zumindest teilweise in entsprechende Befehle oder Nachrichten für den Rechner umzusetzen,
**gekennzeichnet durch**
ein Aufzeichnungsmodul (57), das dazu ausgelegt ist, während eines Aufzeichnungszeitintervalls (32) einen Datenverkehr auf dem Feldbus (5, 48), der ein bestimmtes Feldgerät oder eine Gruppe von Feldgeräten betrifft, als Dienstsequenz aufzuzeichnen;
ein Wiedergabemodul (58), das dazu ausgelegt ist, entsprechend einem vordefinierten Zeitplan die vorher aufgezeichnete Dienstsequenz oder eine davon abgeleitete Dienstsequenz wiederzugeben und über die zweite Schnittstelle auf dem Feldbus (5, 48) zu senden,
indem die aufgezeichnete Dienstsequenz **durch** die Feldbusschnittstelleneinheit entsprechend dem vorgegebenen Zeitplan selbsttätig aufgerufen wird.

2. Feldbusschnittstelleneinheit nach Anspruch 1, **dadurch gekennzeichnet, dass** die Feldbusschnittstelleneinheit als Master für den Feldbus ausgebildet ist.

3. Feldbussrhnittstelleneinheit nach einem der Ansprüche 1 oder 2, **dadurch gekennzeichnet, dass** das Aufzeichnungsmodul dazu ausgelegt ist, aus Befehlen oder Nachrichten, die auf dem Feldbus an das bestimmte Feldgerät gesendet werden, oder aus Befehlen oder Nachrichten, die von dem bestimmten Feldgerät auf dem Feldbus gesendet werden, Adressparameter zu ermitteln, unter denen das bestimmte Feldgerät adressiert werden kann.

4. Fefdbusschnittstelleneinheit nach einem der Ansprüche 1 bis 3, **dadurch gekennzeichnet, dass** der Datenverkehr auf dem Feldbus, der das bestimmte Feldgerät oder die Gruppe von Feldgeräten betrifft und während des Aufzeichnungszeitintervalls aufgezeichnet wird, zumindest zum Teil durch mindestens einen Befehl des Rechners verursacht ist, der vom Rechner zur Feldbussehniftstelleneinheit übermittelt wird.

5. Feldbusschnittstelleneinheit nach einem der Ansprüche 1 bis 3, **dadurch gekennzeichnet, dass** der Datenverkehr auf dem Feldbus, der das bestimmte Feldgerät oder die Gruppe von Feldgeräten betrifft und während des Aufzeichnungszeitintervalls aufgezeichnet wird, durch mindestens einen Befehl verursacht ist, der von einer anderen Quelle als dem Rechner ausgesendet wird.

6. Feldbusschnittstelleneinheit nach einem der Ansprüche 1 bis 5, **dadurch gekennzeichnet, dass** das Aufzeichnungsmodul dazu ausgelegt ist, auf eine von dem Rechner empfangene Aufzeichnungsanforderung hin während des Aufzeichnungszeitintervalls den Datenverkehr auf dem Feldbus, der das bestimmte Feldgerät oder die Gruppe von Feldgeräten betrifft, als Dienstsequenz aufzuzeichnen.

7. Feldbusschnittstelleneinheit nach Anspruch 6, **dadurch gekennzeichnet, dass** das Aufzeichnungsmodul dazu ausgelegt ist, den Datenverkehr auf dem Feldbus, der das bestimmte Feldgerät oder die Gruppe von Feldgeräten betrifft, ab dem Empfang der Aufzeichnungsanforderung so lange aufzuzeichnen, bis vom Rechner eine Benachrichtigung über das Aufzeichnungsende empfangen wird.

8. Feldbusschnittsteileneinheit nach einem der Ansprüche 1 bis 7, **dadurch gekennzeichnet, dass** das Wiedergabemodul dazu ausgelegt ist, mindestens eine aufgezeichnete Dienstsequenz entsprechend einem zugehörigen vordefinierten Zeitplan auf dem Feldbus zu senden.

9. Feldbusschnittstelleneinheit nach einem der Ansprüche 1 bis 8, **dadurch gekennzeichnet, dass** das Wiedergabemodul dazu ausgelegt ist, mindestens eine Dienstsequenz zur Zustandsüberwachung eines bestimmten Feldgeräts entsprechend einem zugehörigen vordefinierten Zeitplan regelmäßig auf dem Feldbus zu senden.

10. Feldbusschnittstelleneinheit nach einem der Ansprüche 1 bis 9, **dadurch gekennzeichnet, dass** es sich bei dem Feldbus um einen Profibus handelt, und dass das Aufzeichnungsmodul dazu ausgelegt ist, Telegramme eines azyklischen Datenverkehrs, die das bestimmte Feldgerät oder die Gruppe von Feldgeräten betreffen, aufzuzeichnen.

11. Faldbussystem, welches aufweist
eine Feldbussehnittstelleneinheit (13, 56) gemäß einem der Ansprüche 1 bis 10;
einen Rechner (11, 63), der mit der ersten Schnittstelle der Feldbusschnittstelleneinheit verbunden ist, wobei die Feldbusschnittstelleneinheit (13, 56) dazu ausgelegt ist, über die erste Schnittstelle Befehle oder Nachrichten mit dem Rechner(11, 63) auszutauschen;
einen Feldbus (5, 48), der mit der zweiten Schnittstelle der Feldbusschnittstelleneinheit verbunden ist, wobei die Feldbusschnittstelleneinheit (13, 56) dazu ausgelegt ist, über die zweite Schnittstelle Befehle oder Nachrichten mit dem Feldbus (5, 48) auszutauschen;
mindestens ein Feldgerät (1-4, 50, 51), das unmittelbar oder über einen Protokollumsetzer (6, 49) mit dem Feldbus (5, 48) gekoppelt ist.

12. Feldbussystem nach Anspruch 11, **dadurch gekennzeichnet, dass** auf dem Rechner ein Feldgeräte-Verwaltungstool installiert Ist, das dazu ausgelegt ist, Befehle oder Nachrichten zum Ansprechen von mindestens einem an den Feldbus angeschlossenen Feldgerät aufzusetzen.

13. Feldbussystem nach Anspruch 12, **dadurch gekennzeichnet, dass** das Feldgeräte-Verwaltungstool dazu ausgelegt ist, beim Aufsetzen der Befehle oder Nachrichten zum Ansprechen des mindestens einen Feldgeräts Gerätebeschreibungsdateien der Feldbusschnittstelleneinheit, des Feldgeräts und, falls vorhanden, des Protokollumsetzers heranzuziehen.

14. Verfahren zum Aufzeichnen und Wiedergeben einer Dienstsequenz durch eine Feldbusschnittstelleneinheit (13, 56), wobei die Feldbusschnifitstelleneinheit (13, 56) eine erste Schnittstelle zur Verbindung mit einem Rechner (11, 63) und eine zweite Schnittstelle zur Verbindung mit einem Feldbus (5, 48) umfasst,
**gekennzeichnet durch** folgenden Schritt:
Aufzeichnen eines Datenverkehrs auf dem Feldbus (5, 48) **durch** die Feldbusschnittstelleneinheit (13, 56) während eines Aufzeichnungsintervalls (32) als Dienstsequenz, wobei der Datenverkehr ein bestimmtes Feldgerät oder eine Gruppe von Feldgeräten betrifft,
Wiedergeben der aufgezeichneten Dienstsequenz oder einer davon abgeleiteten Dienstsequenz **durch** die Feldbusschnittstelleneinheit (13, 56) und Senden der Dienstsequenz über die zweite Schnittstelle auf dem Feldbus (5, 48), auf eine vom Rechner (11, 63) empfangene Wiedergabeanforderung (41) hin oder entsprechend einem vordefinierten Zeitplan,
wobei vermittels der Feldbusschnittstelleneinheit von dem Rechner empfangene Befehle oder Nachrichten zumindest teilweise in entsprechende Befehle oder Nachrichten für eine Übertragung auf dem Feldbus umgesetzt werden und auf dem Feldbus übertragene Befehle oder Nachrichten zumindest teilweise in entsprechende Befehle oder Nachrichten für den Rechner umgesetzt werden,
indem die aufgezeichnete Dienstsequenz **durch** die Feldbusschnittstelleneinheit entsprechend dem vorgegebenen Zeitplan selbsttätig aufgerufen wird.

## Claims

1. Fieldbus interface unit (13, 56) for a fieldbus (5, 48), with
a first interface designed for connection to a computer (11, 63), wherein said fieldbus interface unit (13, 56) is designed to exchange commands or messages with the computer (11, 63) via the first interface;
a second interface designed for connection to a fieldbus (5, 48), wherein the fieldbus interface unit (13, 56) is designed to exchange commands or messages with the fieldbus (5, 48) via the second interface;
wherein the fieldbus interface unit is further designed to convert, at least partially, commands or messages received from the computer to corresponding commands or messages for transmission on the fieldbus, and to convert, at least partially, commands or messages received on the fieldbus to corresponding commands or messages for the computer,
**characterized in that**
a recording module (57), which is designed to record, during a recording interval (32), data traffic on the fieldbus (5, 48) as a service sequence, said traffic concerning a certain field device or a group of field devices;
a relay module (58), which is designed to relay the previously recorded service sequence or a service sequence derived therefrom, in accordance with a predefined schedule and to send it on the fieldbus (5, 48) via the second interface,
by the recorded service sequence being called automatically by the fieldbus interface unit in accordance with the predefined schedule.

2. Fieldbus interface unit as claimed in Claim 1, **characterized in that** the fieldbus interface unit is designed as a master for.the fieldbus.

3. Fieldbus interface unit as claimed in one of the Claims 1 or 2, **characterized in that** the recording module is designed to use commands or messages that are sent on the fieldbus to the specific field device, or commands or messages that are sent from the specific field device to the fieldbus to determine address parameters at which the specific field device can be addressed.

4. Fieldbus interface unit as claimed in one of the Claims 1 to 3, **characterized in that** the data traffic on the fieldbus that concerns the specific field device or group of field devices and is recorded during the recording interval is caused at least in part by at least one command of the computer that is transmitted from the computer to the fieldbus interface unit.

5. Fieldbus interface unit as claimed in one of the Claims 1 to 3, **characterized in that** the data traffic on the fieldbus that concerns the specific field device or group of field devices and is recorded during the recording interval is caused by at least a command which is sent from a source other than the computer.

6. Fieldbus interface unit as claimed in one of the Claims 1 to 5, **characterized in that** the recording module is designed to record as the service sequence the data traffic on the fieldbus that concerns the specific field device or group of field devices during the recording interval following a recording command received from the computer.

7. Fieldbus interface unit as claimed in Claim 6, **characterized in that** the recording module is designed to record the data traffic on the fieldbus that concerns the specific field device or group of field devices from the moment the recording request is received until a message concerning the end of recording is received from the computer.

8. Fieldbus interface unit as claimed in one of the Claims 1 to 7, **characterized in that** the relay module is designed to send at least one recorded service sequence on the fieldbus in accordance with an associated predefined schedule.

9. Fieldbus interface unit as claimed in one of the Claims 1 to 8, **characterized in that** the relay module is designed to send at least one service sequence regularly on the fieldbus in accordance with an associated predefined schedule for the purpose of monitoring the status of a certain field device.

10. Fieldbus interface unit as claimed in one of the Claims 1 to 9, **characterized in that** the fieldbus is a Profibus and that the recording module is designed to record messages of acyclic data traffic that concern the specific field device or group of field devices.

11. Fieldbus system, which comprises
a fieldbus interface unit (13, 56) as claimed in one of the Claims 1 to 10;
a computer (11, 63) which is connected to the first interface of the fieldbus interface unit, wherein the fieldbus interface unit (13, 56) is designed to exchange commands or messages with the computer (11, 63) via the first interface;
a fieldbus (5, 48) which is connected to the second interface of the fieldbus interface unit, wherein the fieldbus interface unit (13, 56) is designed to exchange commands or messages with the fieldbus (5, 48) via the second interface;
at least one field device (1-4, 50, 51) which is coupled directly or via a protocol converter (6, 49) with the fieldbus (5, 48).

12. Fieldbus system as claimed in Claim 11, **characterized in that** a field device administration tool is installed on the computer, said tool being designed to set up commands or messages for addressing at least one field device connected to the fieldbus.

13. Fieldbus system as claimed in Claim 12, **characterized in that** the field device administration tool is designed to use device description files of the fieldbus interface unit, the field device and, if available, the protocol converter, when setting up the commands or messages for addressing the at least one field device.

14. Procedure designed for recording and relaying a service sequence by a fieldbus interface unit (13, 56), wherein the fieldbus interface unit (13, 56) comprises a first interface for connection to a computer (11, 63) and a second interface designed for connection to a fieldbus (5, 48),
**characterized by** the following step:
Data traffic on the fieldbus (5, 48) is recorded during a recording interval (32) as a service sequence by the fieldbus interface unit (13, 56), wherein the data traffic concerns a certain field device or group of field devices,
the service sequence or a service sequence derived therefrom is relayed by the fieldbus interface unit (13, 56) and the service sequence is sent on the fieldbus (5, 48) via the second interface following a relay command (41) received from the computer (11, 63) or in accordance with a predefined schedule,
wherein by means of the fieldbus interface unit commands or messages received from the computer are converted, at least in part, to corresponding commands or messages for transmission on the fieldbus, and commands or messages transmitted on the fieldbus are converted, at least in part, to commands or messages for the computer by the recorded service sequence being called automatically by the fieldbus interface unit in accordance with the predefined schedule.

## Revendications

1. Unité d'interface de bus de terrain (13, 56) pour un bus de terrain (5, 48), avec
une première interface destinée à la liaison avec un ordinateur (11, 63), l'unité d'interface de bus de terrain (13, 56) étant conçue de manière à échanger par l'intermédiaire de la première interface des commandes ou des messages avec l'ordinateur (11, 63) ;
une deuxième interface destinée à la liaison avec le bus de terrain (5, 48), l'unité d'interface de bus de terrain (13, 56) étant conçue de telle sorte à échanger par l'intermédiaire de la deuxième interface des commandes ou des messages avec le bus de terrain (5, 48) ;
l'unité d'interface de bus de terrain étant en outre conçue de telle manière à convertir les commandes ou les messages reçus par l'ordinateur, au moins partiellement en commandes ou messages pour une transmission sur le bus de terrain, et à convertir les commandes ou messages transmis sur le bus de terrain, au moins partiellement en commandes ou messages correspondants pour l'ordinateur,
**caractérisée par**
un module d'enregistrement (57), qui est conçu de telle sorte à enregistrer en tant que séquence de service, pendant un intervalle d'enregistrement (32), un trafic de données sur le bus de terrain (5, 48), lequel trafic concerne un appareil de terrain défini ou un groupe d'appareils de terrain ;
un module de restitution (58), qui est conçu de telle sorte à restituer, selon un timing prédéfini, la séquence de service précédemment enregistrée, ou à restituer une séquence de service dérivée de celle-ci, et à l'émettre sur le bus de terrain (5, 48) par l'intermédiaire de la deuxième interface,
en ce que la séquence de service enregistrée est appelée automatiquement par l'unité d'interface de bus de terrain selon le timing prédéfini.

2. Unité d'interface de bus de terrain selon la revendication 1, **caractérisée en ce que** l'unité d'interface de bus de terrain est conçue en tant qu'unité maître pour le bus de terrain.

3. Unité d'interface de bus de terrain selon l'une des revendications 1 ou 2, **caractérisée en ce que** le module d'enregistrement est conçu de telle sorte à déterminer, à partir de commandes ou de messages, qui sont émis sur le bus de terrain à l'appareil de terrain défini, ou à partir de commandes ou de messages, qui sont émis par un appareil de terrain défini sur le bus de terrain, des paramètres d'adresse parmi lesquels l'appareil de terrain défini peut être adressé.

4. Unité d'interface de bus de terrain selon l'une des revendications 1 à 3, **caractérisée en ce que** le trafic de données sur le bus de terrain, qui concerne l'appareil de terrain défini ou le groupe d'appareils de terrain et qui est enregistré pendant l'intervalle d'enregistrement, est occasionné au moins partiellement par au moins une commande de l'ordinateur, qui est transmise par l'ordinateur vers l'unité d'interface de bus de terrain.

5. Unité d'interface de bus de terrain selon l'une des revendications 1 à 3, **caractérisée en ce que** le trafic de données sur le bus de terrain, qui concerne l'appareil de terrain défini ou le groupe d'appareils de terrain et qui est enregistré pendant l'intervalle d'enregistrement, est occasionné par au moins une commande, laquelle est émise par une source autre que l'ordinateur.

6. Unité d'interface de bus de terrain selon l'une des revendications 1 à 5, **caractérisée en ce que** le module d'enregistrement est conçu de telle sorte à enregistrer en tant que séquence de service, suite à une demande d'enregistrement reçue par l'ordinateur, le trafic de données sur le bus de terrain pendant l'intervalle d'enregistrement, trafic qui concerne l'appareil de terrain défini ou le groupe d'appareils de terrain.

7. Unité d'interface de bus de terrain selon la revendication 6, **caractérisée en ce que** le module d'enregistrement est conçu de telle sorte à enregistrer le trafic de données sur le bus de terrain, qui concerne l'appareil de terrain défini ou le groupe d'appareils de terrain, à partir de la réception de la demande d'enregistrement, jusqu'à ce qu'un avis concernant la fin d'enregistrement soit reçu par l'ordinateur.

8. Unité d'interface de bus de terrain selon l'une des revendications 1 à 7, **caractérisée en ce que** le module de restitution est conçu de telle manière à émettre sur le bus de terrain au moins une séquence de service enregistrée selon un timing prédéfini correspondant.

9. Unité d'interface de bus de terrain selon l'une des revendications 1 à 8, **caractérisée en ce que** le module de restitution est conçu de telle manière à émettre régulièrement sur le bus de terrain au moins une séquence de service en vue de la surveillance d'état d'un appareil de terrain prédéfini selon un timing prédéfini correspondant.

10. Unité d'interface de bus de terrain selon l'une des revendications 1 à 9, **caractérisée en ce que**, concernant le bus de terrain, il s'agit d'un Profibus, et **en ce que** le module d'enregistrement est conçu de telle manière à enregistrer les télégrammes d'un trafic de données acyclique, qui concernent l'appareil de terrain défini ou le groupe d'appareils de terrain.

11. Système de bus de terrain, lequel comprend
une unité d'interface de bus de terrain (13, 56) selon l'une des revendications 1 à 10 ;
un ordinateur (11, 63), lequel est relié avec la première interface de l'unité d'interface de bus de terrain, l'unité d'interface de bus de terrain (13, 56) étant conçue de telle sorte à échanger avec l'ordinateur (11, 63) des commandes ou des messages par l'intermédiaire de la première interface ;
un bus de terrain (5, 48), lequel est relié avec la deuxième interface de l'unité d'interface de bus de terrain, l'unité d'interface de bus de terrain (13, 56) étant conçue de telle sorte à échanger avec le bus de terrain (5, 48) des commandes ou des messages par l'intermédiaire de la deuxième interface ;
au moins un appareil de terrain (1-4, 50, 51), lequel est couplé directement ou par l'intermédiaire d'un convertisseur de protocole (6, 49) avec le bus de terrain (5, 48).

12. Système de bus de terrain selon la revendication 11, **caractérisé en ce qu'**est installé sur l'ordinateur un outil de gestion d'appareil de terrain, lequel est conçu de telle sorte à définir des commandes ou des messages pour l'adressage d'au moins un appareil de terrain raccordé au bus de terrain.

13. Système de bus de terrain selon la revendication 12, **caractérisé en ce que** l'outil de gestion d'appareil de terrain est conçu, lors de la définition des commandes ou des messages pour l'adressage de l'au moins un appareil de terrain, de telle sorte à recourir aux fichiers de description d'appareil de l'unité d'interface de bus de terrain, de l'appareil de terrain et, si présent, du convertisseur de protocole.

14. Procédé destiné à l'enregistrement et à la restitution d'une séquence de service par une unité d'interface de bus de terrain (13, 56), l'unité d'interface de bus de terrain (13, 56) comprenant une première interface destinée à la liaison avec un ordinateur (11, 63) et une deuxième interface destinée à la liaison avec un bus de terrain (5, 48),
**caractérisé par** l'étape suivante :
Enregistrement d'un trafic de données sur le bus de terrain (5, 48) par l'unité d'interface de bus de terrain (13, 56) pendant un intervalle d'enregistrement (32) en tant que séquence de service, le trafic de données concernant un appareil de terrain défini ou un groupe d'appareils de terrain,
Restitution de la séquence de service enregistrée ou d'une séquence de service dérivée par l'unité d'interface de bus de terrain (13, 56) et émission de la séquence de service par l'intermédiaire de la deuxième interface sur le bus de terrain (5, 48), suite à une demande de restitution (41) reçue par l'ordinateur (11, 63) ou selon un timing prédéfini, pour lequel, par l'intermédiaire de l'unité d'interface de bus de terrain (13, 56), les commandes ou messages reçus par l'ordinateur sont convertis au moins partiellement en des commandes ou messages correspondants pour une transmission sur le bus de terrain et les commandes ou messages transmis sur le bus de terrain sont convertis au moins partiellement en commandes ou messages correspondants pour l'ordinateur,
en ce que la séquence de service enregistrée est appelée automatiquement par l'unité d'interface de bus de terrain selon le timing prédéfini.
